# EUROPEAN PATENT APPLICATION

(11) **EP 2 541 216 A2**
(43) Date of publication of application: **02.01.2013**
(21) Application number: 12174586.3
(22) Date of filing: 02.07.2012
(51) Int. Cl.: G01D 5/26, G01D 5/38

(54) **Optical encoder including passive readhead with remote contactless excitation and signal sensing**

(30) Priority: 01.07.2011 US 201113175795
(71) Applicant: Mitutoyo Corporation, Kawasaki-shi Kanagawa 213-0012 (JP)
(72) Inventor: Tobiason, Joseph D., Woodinville, WA Washington 98077 (US)
(74) Representative: Grünecker, Kinkeldey, Stockmair & Schwanhäusser

(57) **Abstract**

An optical encoder system (100) with a passive readhead (110) is provided. The passive readhead does not have an attached cable and is an all optical readhead where the measurement position information relative to a scale (80) is read remotely by direct line-of-sight optical transmission to a remote companion system (180). The remote companion system includes a light source (181) and a sensing portion (182). In one embodiment, the sensing portion may comprise a remote lens portion and a photodetector arrangement. The remote companion system is configured to optically sense intensities of imaged regions from the passive readhead, and to output a plurality of signals indicative of the measurement position based on the sensed intensities.

## Description

### FIELD OF THE INVENTION

The invention relates generally to precision measurement instruments, and more particularly to optical displacement encoders.

### BACKGROUND OF THE INVENTION

Various optical encoders for sensing linear, rotary or angular movement are currently available. Optical encoders generally utilize a periodic scale that allows the displacement of a readhead relative to the scale to be determined by accumulating incremental units of displacement starting from an initial point along a track on the periodic scale. Coded scale tracks may supplement or replace such a periodic scale in some applications, in order to provide an absolute position output at any point along the scale.

In some applications, it is desirable if at least the electronic portion of an optical encoder is located remotely from the scale. For example, this may allow an encoder readhead that is located proximate to the scale to be more compact, or more reliable. One approach for locating electronics remotely from the scale has been to locate an optical readhead close to the scale and route illumination and optical signals between the readhead and the remote electronics or host system through optical fibers. One system utilizing optical fibers is disclosed in U.S. Patent No. 4,733,071, issued to Tokunaga. The system described in the '071 patent has a code member scale, and an optical sensor head comprising an optical fiber tip light emitter and two optical fiber tip receptors closely arranged along the code member measuring axis. However, the accuracy of the resulting encoder is relatively crude. Two additional exemplary fiber optic encoder readhead systems for sensing the displacement of a scale grating with higher accuracy are disclosed in U.S. Patent Nos. 6,906,315 and 7,126,696, which are hereby incorporated by reference in their entireties. As described in the '315 patent, the detector channels of the readhead are fiber optic detector channels having respective phase grating masks, and the fiber optic encoder readhead is configured to detect the displacement of a self-image of the scale grating. As described in the '696 patent, the detector channels of the readhead are fiber optic detector channels having respective phase grating masks, and the fiber optic encoder readhead is configured to detect the displacement of interference fringes arising from the scale grating. However, in readhead systems such as those of the '315 and '696 patents, the required cable to the readhead may be relatively expensive, difficult to route, and may result in a relatively small sensing area.

Remote or telescopic imaging of a scale may be used for detecting displacement of the scale without the need for an electronic or optical cable proximate to the scale. Alternatively, a focused laser beam may be used to detect the displacement of a scale at a distance, as disclosed in U.S. Patent No. 4,899,048, issued to Shelander. However, tradeoffs between the distance of the source and imaging system from the scale, the limited optical and/or measurement resolution at increasing distances, and the difficulty and reliability of the required optical alignment, render such systems impractical for many practical applications. An improved system for sensing optical encoder scale displacement with high resolution, from a distance, and without the need for routing cables proximate to the scale, would be desirable.

### SUMMARY OF THE INVENTION

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

An optical encoder system with a passive readhead is provided. In accordance with one aspect of the invention, the passive readhead does not have an attached cable and is an all optical readhead where the measurement position information relative to a scale is read remotely by direct line-of-sight optical transmission to a remote companion system.

In accordance with another aspect of the invention, in one embodiment, the passive readhead includes a scale illumination path portion and a measurement light path portion, while the remote companion system includes a light source and a sensing portion. In one embodiment, the sensing portion of the remote companion system may comprise a remote lens portion and a photodetector arrangement. The remote companion system is arranged remotely from the passive readhead (e.g., the remote companion system and passive readhead are located in separate housings) to output source light along a first path to the passive readhead which is arranged to input the source light and output scale illumination light from the scale illumination path portion to the scale grating. The scale grating is arranged to receive the scale illumination light and output interference light to the passive readhead, wherein a spatial phase of the interference light depends upon the measurement position of the passive readhead relative to the scale grating.

In accordance with another aspect of the invention, in one embodiment the passive readhead is further arranged such that the measurement light path portion receives the interference light from the scale grating and outputs measurement light, comprising a plurality of respective intensity regions, along a second path to the remote lens portion. The measurement light path portion includes a phase signal portion comprising a plurality of phase paths (e.g., spatial filters, in one particular embodiment) which input the interference light and provide corresponding respective intensity regions. In various embodiments, the phase paths have corresponding phase offsets and are configured such that an intensity of each respective intensity region is related to the spatial phase of the input interference light and the phase offset of the corresponding phase path. The remote lens portion is arranged to input the measurement light and provide an image of the plurality of respective intensity regions to the photodetector arrangement. In some embodiments, the remote lens portion may be configured to provide a desired amount of image blur, to help spatially average or blur patterns in the light that it outputs, such that the imaged intensity regions are each more homogeneous at the photodetector arrangement. This may be advantageous for making alignment less critical and/or more robust, and/or reducing or eliminating errors that may arise due to interference fringe remnants that may otherwise remain in the detected measurement light in some embodiments. The photodetector arrangement is configured to sense an intensity of each of the imaged plurality of respective intensity regions and output a plurality of signals indicative of the measurement position based on the sensed intensities. Since phase signals (e.g., fringe patterns) are converted to and/or imaged as "macroscopic" intensity regions by the remote companion system, the detected signals are robust against environmental variations (e.g., turbulence) encountered in transit from the passive readhead to the remote companion system. In contrast, systems that transmit a coherent light fringe pattern over significant distances, and derive position information from the fringe pattern, are sensitive to disturbance of the fringe pattern by environmental variations (e.g., turbulence).

In accordance with another aspect of the invention, in one embodiment the phase signal portion may comprise spatial filters having light-blocking elements arranged in a periodic pattern having a pitch that is operable for spatially filtering the measurement light. In one embodiment, at least a portion of the periodic pattern of the light blocking elements may be rotated with respect to the periodic pattern of the measurement light, and in one specific implementation may have a chevron shape that is symmetric with respect to an axis parallel to the measurement axis. The passive readhead may comprise a substrate to which the spatial filters are fixed, and the scale illumination light may be transmitted through the substrate. In one embodiment, the scale illumination path portion may comprise a source grating (e.g., located on the substrate) that inputs the source light and outputs scale light comprising diffracted orders.

In accordance with another aspect of the invention, in one embodiment the phase signal portion may include phase paths that each comprise a combiner grating which inputs rays of the interference light from the scale grating and output the rays of various diffracted orders of the interference light along parallel paths, such that the parallel rays interfere to provide corresponding intensity regions output from each phase path.

In accordance with another aspect of the invention, in one embodiment the measurement light path portion comprises a diffuser positioned to receive light from the phase signal portion and output the measurement light. In an alternative embodiment, the measurement light path portion comprises a layer of phosphor particles positioned to receive light from the phase signal portion and output the measurement light.

In accordance with another aspect of the invention, in one embodiment the second path is longer (e.g., at least 5x longer) than a gap distance between the passive readhead and the scale grating. In one embodiment, the second path may comprise a transparent material associated with an enclosure that surrounds the passive readhead, which may be utilized to establish a desired spacing of the remote companion system relative to the passive readhead in a mechanically stable configuration during a measurement operation.

### BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
FIGURE 1 is a schematic diagram of a general exemplary embodiment of an optical encoder configuration including a passive readhead and a remote companion system;
FIGURE 2 is a schematic diagram of an exemplary embodiment of an optical encoder configuration wherein the passive readhead includes a first embodiment of a measurement light portion, and a beam splitter is used to direct the input and output optical paths such that they are spaced apart along the X-axis;
FIGURE 3 is a schematic diagram of an exemplary embodiment of an optical encoder configuration wherein the passive readhead includes a second embodiment of a measurement light portion, and the input and output optical paths are spaced apart along the Y-axis;
FIGURE 4 is a schematic diagram of an exemplary embodiment of a substrate including slanted light-blocking elements which may be used in a phase signal portion of a passive readhead;
FIGURE 5 is a schematic diagram of an exemplary embodiment of an optical encoder configuration wherein the passive readhead includes a third embodiment of a measurement light portion, and the input and output optical paths are spaced apart along the Y-axis;
FIGURE 6 is a schematic diagram of an exemplary embodiment of an optical encoder configuration with a deflector element adjacent to the passive readhead wherein the input and output optical paths approximately parallel to the measuring axis direction; and
FIGURE 7 is a schematic diagram of an exemplary embodiment of a dynamic tracking system which may be used in the remote companion system of FIGURE 6.

### DETAILED DESCRIPTION OF THE PREFERRED EMBODIMENT

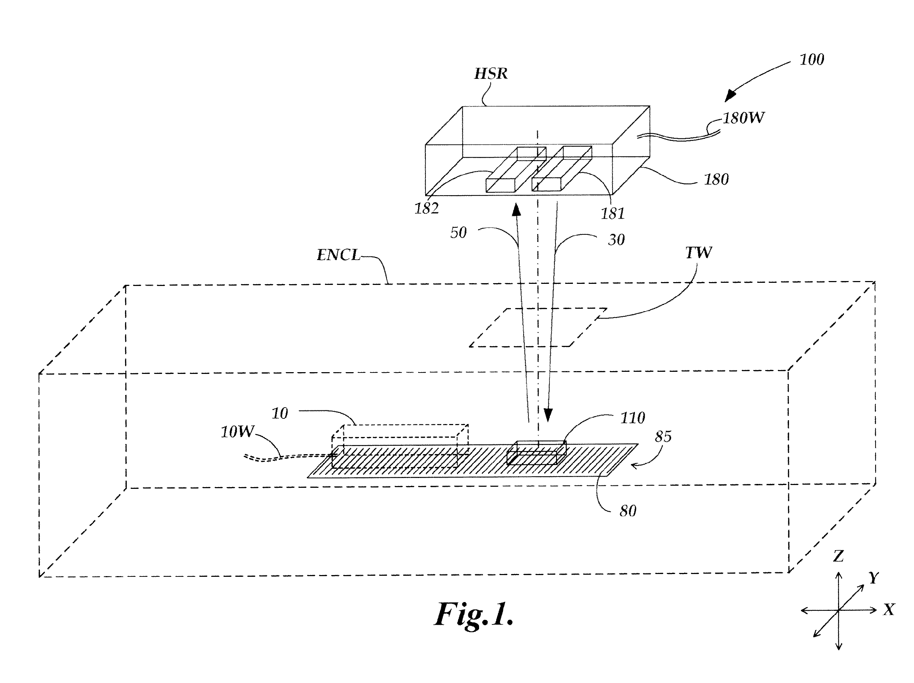

FIGURE 1 is a schematic diagram of a general exemplary embodiment of an optical encoder configuration 100 including a passive readhead 110, a remote companion system 180, and a scale grating 80. As will be described in more detail below, the passive readhead 110 does require an attached cable and is an all optical readhead wherein the measurement position information relative to the scale grating 80 is read remotely by direct line-of-sight optical transmission to the remote companion system 180.

As shown in FIGURE 1, the passive readhead 110 is located proximate to the scale grating 80 which comprises a periodic grating pattern 85 extending along a measurement axis direction X. The passive readhead 110 and scale grating 80 are movable relative to one another along the measurement axis direction X. In one embodiment, the optical encoder configuration 100 may be used in conjunction with an enclosure ENCL (e.g., a vacuum chamber) including a transparent window TW, which surrounds the passive readhead 110, as shown schematically in FIGURE 1. In contrast with prior art encoder readheads (represented by the block 10 in FIGURE 1) which require cable attachments (represented by the cable 10W in FIGURE 1) in order to exchange power and/or control signals with a host system, the passive readhead 110 may be used without a cable attachment. Thus, for optical encoder configuration 100 including the passive readhead 110, the enclosure ENCL does not require provisions for wiring pass-throughs, which eliminates complexity and expense for such applications. However, it will be understood that the enclosure ENCL is not required. Rather it is an application environment wherein the optical encoder configuration 100 is particularly useful. A housing HSR may be provided for the remote companion system 180, such that the passive readhead 110 and remote companion system 180 are contained in separate housings. The remote companion system 180 and the passive readhead 110 are mounted in a mechanically stable configuration relative to one another during a measurement operation. That is, they are mounted to a machine frame element, or the like, such that they are fixed relative to one another, in order to reliably exchange source light 30 and measurement light 50, as outlined below.

The remote companion system 180, which is located remotely (e.g., in a separate housing) from the passive readhead 110, includes a light source 181 and a sensing portion 182. The remote companion system 180 may be conveniently connected by wires 180W to a host system or the like. Alternatively, it may include a self-contained and/or wireless power and signal processing configuration, such that it may operate wirelessly with a host system, or provide an independent position display, or the like. In operation, the light source 181 (e.g., a laser diode) outputs source light 30 along a first path to the passive readhead 110. The scale grating 80 receives light from the passive readhead 110 and returns position-dependent interference light to the passive readhead 110. The passive readhead 110 optically processes interference light and outputs measurement light 50 along a second path from the passive readhead 110 to the sensing portion 182 of the remote companion system 180. In an application including the enclosure ENCL, a transparent window TW may be provided through which the source light 30 and measurement light 50 pass. As will be described in more detail below, the remote companion system 180 is configured to optically sense intensities of imaged regions in the measurement light 50 from the passive readhead 110, and output a plurality of signals indicative of the measurement position based on the sensed intensities.

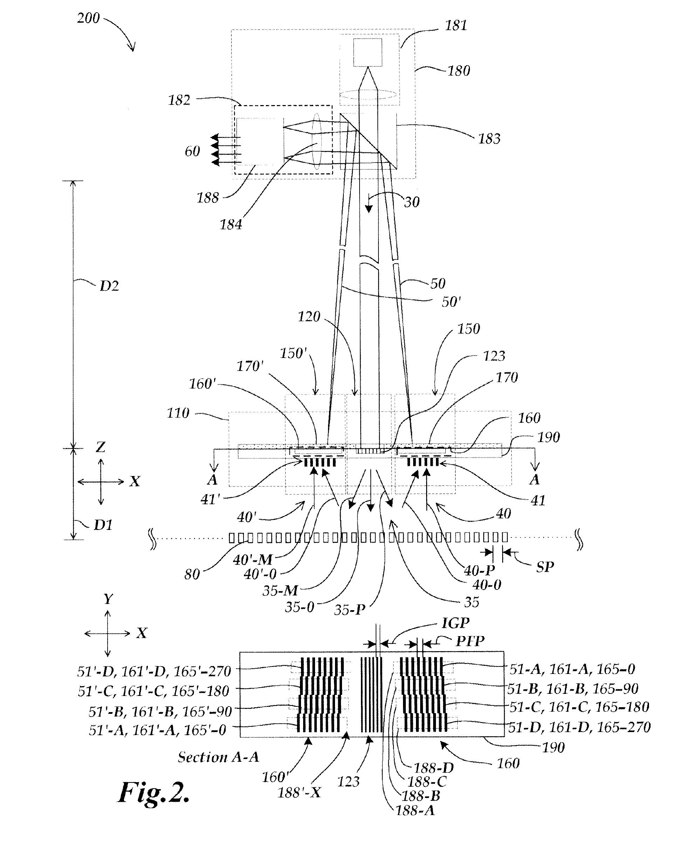

It will be appreciated that the optical encoder configuration 100 has certain advantages over the prior art readhead 10, in particular with regard to the required cable 10W of the readhead 10 (e.g., a cable including electrical wires, optical fibers, or both). More specifically, in certain implementations the required cable 10W to the readhead 10 may be relatively expensive (e.g., more than 50% of the cost of the readhead), difficult to route (e.g., especially through a vacuum enclosure for which electrical features may be relatively expensive), may have fatigue and lifetime issues, and may limit data rates (e.g., especially in wire cables). In comparison, in the optical encoder configuration 100, the passive readhead 110 does not have an attached cable (e.g., any wires 180W are located with the remote companion system 180) and is an all optical system wherein the information is read remotely by direct line-of-sight optical transmission to the remote companion system 180, which may also allow the passive readhead 110 to be more compact than the prior art readhead 10. Additional advantages and a more specific implementation of the optical encoder configuration 100 are described in more detail below with respect to FIGURE 2.

It will be appreciated that the present invention as schematically illustrated in FIGURE 1 allows for the convenient and economical monitoring of the motion of a scale, with high resolution, from a distance and/or through an enclosure. In contrast to prior art methods, the measuring resolution need not degrade significantly due to the distance of the remote companion system from the scale (e.g., measuring resolution on the order of a micron, 0.1 micron, 0.01 micron, and better may be provided). An additional benefit is that the passive readhead may be relatively compact. An additional benefit of such a system which monitors a scale (e.g., as opposed to using an interferometer), is that the scale may be economical and provides for a known accuracy, and can be installed and utilized by relatively unskilled users.

FIGURE 2 is a schematic diagram showing a side view (along the Y-axis direction) of an exemplary embodiment of an optical encoder configuration 200 utilizing a passive readhead including a first embodiment of a measurement light portion 150 (or 150'), which may be regarded as showing one exemplary embodiment of the optical encoder configuration 100 of FIGURE 1. In the optical encoder configuration 200, the input and output optical paths are spaced apart along the X-axis, and the remote companion system 180 includes a beam splitter 183 to direct the input and output optical paths. The specific embodiment illustrated in FIGURE 2 is exemplary only and not limiting. In the following description, two separate measurement light paths are described with respect to FIGURE 2. The second measurement light path elements are numbered with primes. It will be appreciated that only one measurement light path may actually be required for operation, and the second measurement light path can thus be eliminated in certain embodiments. However, by having redundant light paths in certain embodiments, the signal strength may be improved and certain common mode errors may be rejected by combining the signals from the two paths with appropriate signal processing.

As shown in FIGURE 2, the passive readhead 110 includes a scale illumination path portion 120 and measurement light path portions 150 and 150', while the remote companion system 180 includes the light source 181 (e.g., a laser diode), the sensing portion 182, and a beam splitter 183. The sensing portion 182 includes a remote lens portion 184 and a photodetector arrangement 188. The remote companion system 180 is arranged to output source light 30 which is approximately collimated from the light source 181 through the beam splitter 183 along a first path to the passive readhead 110. The optics in the light source 181 may provide a desired illumination beam cross section size and shape using known principles.

The passive readhead 110 is arranged to input the source light 30 and output scale illumination light 35 from the scale illumination path portion 120 to the scale grating 80. Certain elements of the passive readhead 110 in this regard are shown in more detail in the lower portion of FIGURE 2. More specifically, while the upper portion of FIGURE 2 shows a side view (i.e., a view along the Y-axis direction) of the optical encoder configuration 100, the lower portion of FIGURE 2 shows a view of certain elements on the substrate 190 of the passive readhead 110, along a section AA as defined in the upper portion (i.e., along the Z-axis direction). As shown in the lower portion of FIGURE 2, in the scale illumination path portion 120, the source light 30 reaches an illumination splitter 123 such as a source grating located on the substrate 190 with an illumination grating pitch IGP which provides a plurality of diffracted order beams of the scale light 35 (e.g., 35-0 zero order, 35-P +1st order, 35-M -1^{st} order), to the scale grating 80. Alternatively, a refractive element which functions similarly may be used instead of a source grating.

The scale grating 80 is arranged to receive the scale illumination light 35 and output interference light 40 and 40' to the passive readhead 110, wherein a spatial phase of the interference light depends upon the measurement position of the passive readhead 110 relative to the scale grating 80. In the specific embodiment illustrated in FIGURE 2, the plurality of beams of the scale illumination light 35 (e.g., 35-0 zero order, 35-P +1st order, 35-M -1^{st} order) are diffracted by the scale grating 80 to provide a plurality of beams of interference light 40 and 40' (e.g., 40-0 from the diffracted 35-0 beam, 40-P from the diffracted 35-P beam, 40'-0 from the diffracted 35-0 beam, and 40'-M from the diffracted 35-M beam) that interfere (e.g., to form fringes 41 and 41' in this particular embodiment). More specifically, the interference light 40-0 and 40-P result in interference fringes 41 and the interference light 40'-0 and 40'-M result in interference fringes 41' at the passive readhead 110. It will be appreciated that the illumination grating pitch IGP (or if it is a refractive element, the angle between its surfaces) is chosen to provide the beams at a desired angle relative to one another such that when they diffract from the scale grating 80 (which has the scale pitch SP), they will interfere to provide fringes with the desired fringe pitch.

The measurement light path portions 150 and 150' receive the fringes, and include phase signal portions 160 and 160' (e.g., spatial filters) which spatially filter the fringes, to provide output light, as described in greater detail below. It will be appreciated that in various embodiments the phase signal portions 160 and 160' may be implemented in various forms. In the specific example implementation shown in the lower portion of FIGURE 2, the phase signal portions 160 and 160' comprise a plurality of phase paths 161-X and 161'-X (e.g., 161-A to 161-D and 161'-A to 161'-D, each having corresponding periodic spatial filters 165-0 to 165-270 and 165'-0 to 165'-270) which input the interference light 40 and 40' and output the spatially filtered light to form corresponding respective intensity regions 51-X and 51'-X (e.g., 51-A to 51-D and 51'-A to 51`-D) in the measurement light 50 and 50'. In one embodiment, the phase paths 161-X and 161'-X have corresponding phase offsets and are configured to provide corresponding intensity regions, having intensities related to the spatial phase of the input interference light 40 and 40' and the phase offset of the corresponding phase path.

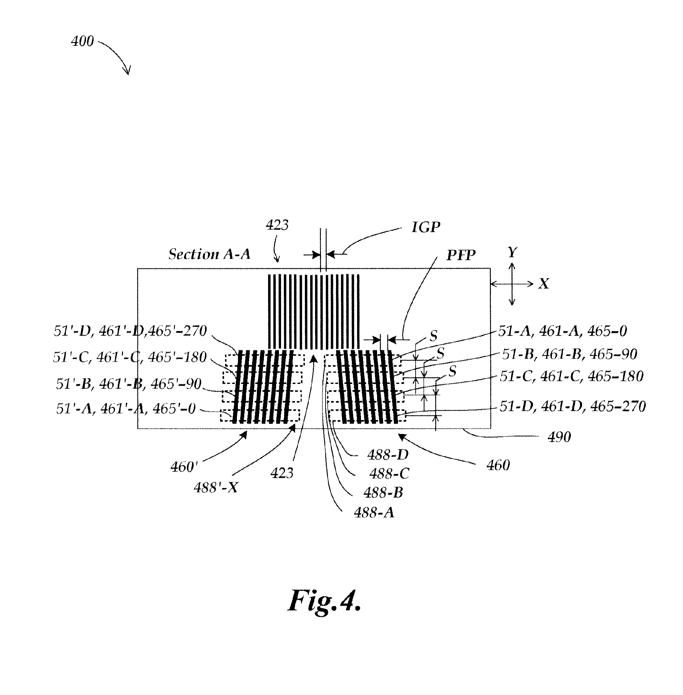

The spatial filters 165-X and 165'-X are fixed to the substrate 190 (through which the scale illumination light 35 is transmitted), and have light-blocking elements arranged in a periodic pattern having a phase filter pitch PFP that is operable for spatially filtering the interference light 40 and 40' to provide the sensed intensity regions 51-X and 51'-X in the measurement light 50 and 50'. The phase filter pitch PFP may be the same as the fringe pitch in various embodiments. In one embodiment, as will be described in more detail below with respect to FIGURE 4, at least a portion of the periodic pattern of the light blocking elements of the spatial filter sections may be rotated with respect to the periodic pattern of the measurement light.

In the specific example implementation shown in the lower portion of FIGURE 2, the phase signal portions 160-X and 160'-X (e.g., spatial filter sections 165-0, 165-90, 165-180, 165-270 and 165'-0, 165'-90, 165'-180, 165'-270) are organized in a quadrature configuration and correspond to the specific phase paths 161-X and 161-X (e.g., phase paths 161-A, 161-B, 161-C, 161-D and 161'-A, 161'-B, 161'-C, 161'-D), respectively. The phase paths 161-X and 161'-X with their corresponding periodic spatial filters 165-X and 165'-X thus input interference light 40 and 40' from the scale grating 80, and output light that is spatially filtered according to the phase offset of the various filters (e.g., according to spatial phase offsets of 0, 90, 180, and 270 degrees, as indicated by their suffixes). In particular, the output light that is spatially filtered from each spatial filter section 165-X and 165'-X provides a spatially filtered pattern of light that has an average intensity that depends on the phase offset of that section relative to the spatial phase of the interference light 40 and 40', which in turn depends on the position of the scale grating 80. In some embodiments, alignment and imaging magnification requirements may be more easily met when each spatially filtered pattern of light is output or imaged through a measurement light dispersing element 170 or 170' (e.g., a diffuser, and/or layer of phosphor particles, or the like) to provide a corresponding intensity region 51-X or 51'-X that may be imaged from various angles and that may have a relatively uniform intensity distribution corresponding to the input average intensity. The various intensity regions 51-X and 51'-X provide output measurement light 50 and 50' that may be sensed and processed to provide differential quadrature signals, as outlined herein.

For purposes of explanation, FIGURE 2 shows representative intensity regions 51-X and 5l'-X and photodetector areas 188-X (e.g., 188-A to 188-D) and 188'-X schematically represented with dashed outlines superimposed on each spatial filter section 165-X and 165'-X and phase path 161-X and 161'-X for illustrating their operational alignment, from the point of view of the operation of the photodetector arrangement 188 in the sensing portion 182. That is, the remote companion system 180 is aligned relative to the passive readhead 110 such that the respective photodetector areas 188-X and 188'-X input measurement light from the corresponding respective intensity regions 51-X and 51'-X. The respective photodetector areas 188-X and 188'-X thus receive an intensity signal related to the position of the scale grating 80 and the spatial phase of the phase signal portions 160-X and 160'-X (e.g., the spatial filter sections 165-X and 165'-X) that determine the measurement light that they receive.

The remote lens portion 184 is arranged to input the measurement light 50 and 50' and provide an image of the plurality of respective intensity regions to the photodetector arrangement 188, as outlined above. In one embodiment, the remote lens portion 184 images a plane approximately at the output of the phase signal portions 160 and 160' onto the photodetector arrangement 188 (e.g., proximate to the output surface of the measurement light dispersing element 170 or 170'). As previously indicated, the photodetector arrangement 188 includes a plurality of photodetectors 188-X or 188'-X and is configured to sense an intensity of each of the imaged plurality of respective intensity regions 51-X or 51`-X and output a plurality of signals 60 based on the sensed intensities and indicative of the measurement position. In some embodiments the remote lens portion 184 may be configured to provide a desired amount of image blur, to help spatially average or blur patterns in the light that it outputs, such that the imaged intensity regions are each more homogeneous at the photodetector arrangement 188. This may be advantageous for making alignment less critical and/or more robust, and/or reducing or eliminating errors that may arise due to interference fringe remnants that may otherwise remain in the detected measurement light in some embodiments.

It should be appreciated that the measurement light dispersing element 170 may be utilized primarily to scatter or otherwise disperse the measurement light 50 and 50' such that it can be imaged by the sensing portion 182 along a plurality of potential imaging paths (e.g., as opposed to only a specific light ray path which would require a precise alignment.) That is, in the absence of a dispersing element 170, in certain embodiments the light rays that pass through the phase signal portions 160 and 160' may continue along their original "straight" paths and potentially miss the sensing portion 182, or make its alignment more difficult, especially if it is tens or hundreds of millimeters away. In certain embodiments, the measurement light dispersing element 170 may comprise a structured diffuser that diffuses the measurement light over a narrow but sufficient range of angles. The diffuser 170 may be utilized to address issues such as environmental variations (e.g., turbulence), by making the fringes more visible from different angles at the remote companion system, regardless of the precise alignment of the passive readhead 110. In an alternative embodiment, a lens arrangement may be utilized in place of the diffuser of the measurement light dispersing element 170, wherein the sensing portion 182 is able to view the lens arrangement from a variety of angles and still receive the measurement light. However, depending on the alignment stability, and the distance of the remote companion system 180, the measurement light dispersing element 170 may be omitted in some embodiments. In some embodiments the light dispersing element 170 may also help spatially average or blur patterns in the light that it inputs, such that the imaged intensity regions are more homogeneous.

As noted above, the measurement light path portion 150 (and/or 150') may receive the interference light 40 (and/or 40') from the scale grating 80 and output the measurement light 50 (and/or 50') along a second (and/or third) path to the remote lens portion 184. It will be appreciated that, due to the remote companion system 180 being located remotely, the second (and/or third) path may have a length D2 that is significantly longer (e.g., at least 5 times longer, in some cases 100X or 1000X longer) than a gap distance D1 between the passive readhead 110 and the scale grating 80, and/or a maximum dimension of the housing of passive readhead 110, itself. Thus, optical paths and design features used in prior art self-contained optical encoder readheads are not sufficient to provide the length D2 contemplated here for the path between the passive readhead 110 and the remote companion system 180. It should be appreciated that despite the length D2 of the path between the passive readhead 110 and the remote companion system 180, the optical encoder configuration 200 may have a measurement position resolution comparable to that of self-contained interferometric type optical encoder readheads (e.g., on the order of microns and down to 1-10 nm interpolated). This is because the passive readhead 110 disclosed above is an interferometric type readhead that converts the finely structured light patterns that are output from the spatial filter sections 165-X and 165'-X to corresponding average intensities which are uniformly distributed and output over relatively large intensity regions (e.g., regions having dimensions on the order of hundreds of microns, or a few millimeters) which may be reliably imaged at a relatively large length D2. Thus, the present invention overcomes resolution limits which might otherwise be associated with simply observing scale displacement through a telescope, or the like. In addition, since phase signals (e.g., fringe patterns) are converted to and/or imaged as "macroscopic" intensity regions by the remote companion system, the detected signals are robust against environmental variations (e.g., turbulence) encountered in transit from the passive readhead 110 to the remote companion system 180. In contrast, systems that transmit a coherent light fringe pattern over long distances, and derive position information from the fringe pattern, are sensitive to disturbance of the fringe pattern by environmental variations (e.g., turbulence).

It will be appreciated that the configuration of the beamsplitter 183 and sensing portion 182 illustrated in FIGURE 2 could be rotated 90 degrees about the Z-axis in an alternative embodiment, with suitable minor adjustments to fulfill the operating principles outlined above.

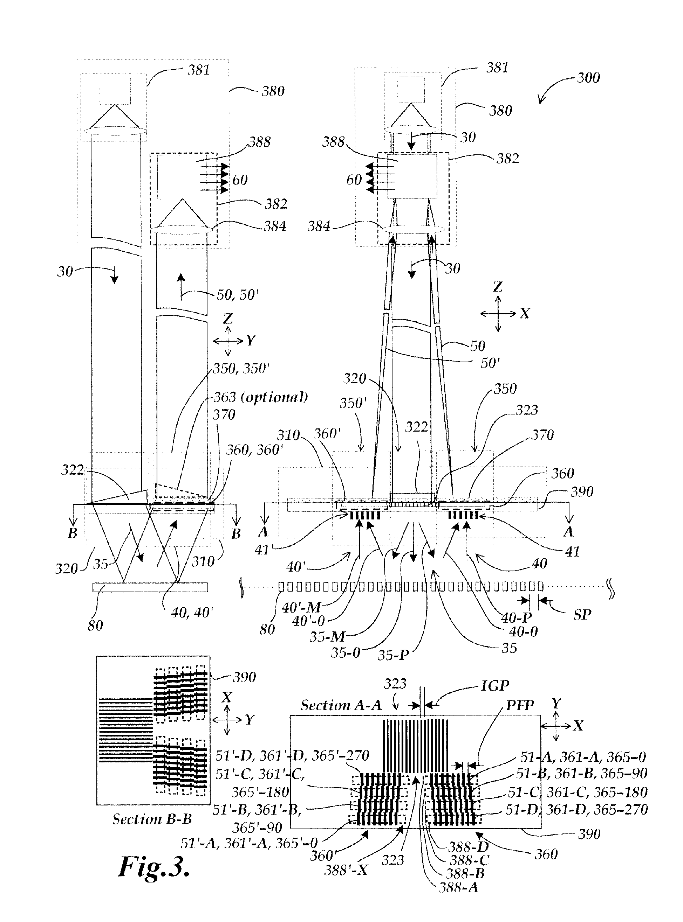

FIGURE 3 is a schematic diagram showing a side view (along the Y-axis direction) and an end view (along the X-axis direction) of an exemplary embodiment of an optical encoder configuration 300 utilizing a passive readhead 310 including a second embodiment of a measurement light portion 350 (or 350'), which may be regarded as showing one exemplary embodiment of the optical encoder configuration 100 of FIGURE 1. In contrast to the optical encoder configuration 200, in the optical encoder configuration 300, the input and output optical paths are spaced apart along the Y-axis. The passive readhead 310 includes a beam deflector 322 so that the input and output optical paths are spaced apart along the Y-axis. The specific embodiment illustrated in FIGURE 3 is exemplary only and not limiting. In various exemplary embodiments, the optical encoder configuration 300 includes various elements and operating principles which are similar to the optical encoder configuration 200 described above with respect to FIGURE 2. In general, elements numbered 3XX in FIGURE 3 provide functions similar to the analogous elements numbered 2XX (that is, with the same numerical suffix) in FIGURE 2, and many elements and aspects of operation may be understood by analogy, and are not described in detail below.

One primary difference from the optical encoder configuration 200 of FIGURE 2 is that the optical encoder configuration 300 includes a beam directing element 322 (e.g., a deflector or prism, or the like). The beam directing element 322 is placed and operates so that the optical paths proximate to the scale grating are not parallel to the X-Y plane, as they are in the optical encoder configuration 200 of FIGURE 2. More specifically, as illustrated in the view along the X-axis direction at the left side of FIGURE 3, the source light 30 travels to the beam directing element 322 which directs it along an inclined path to the scale grating 80 which reflects it along an inclined path, resulting in the measurement light 50 and 50' being spaced apart from the source light 30 along the Y-axis direction.

As shown in FIGURE 3, similar to the corresponding elements of FIGURE 2, the passive readhead 310 includes a scale illumination path portion 320 and measurement light path portions 350 and 350', while the remote companion system 380 includes the light source 381 and the sensing portion 382. It will be appreciated that a beam splitter (e.g., beam splitter 183 of FIGURE 2) is not required in the optical encoder configuration 300, in that the beam directing element 322 is utilized to space apart the source light 30 and measurement light 50 and 50' along the Y-axis. The sensing portion 382 includes a remote lens portion 384 and a photodetector arrangement 388. The remote companion system 380 is arranged to output source light 30 which is approximately collimated from the light source 381 along a first path to the passive readhead 310. The optics in the light source 381 may provide a desired illumination beam cross section size and shape using known principles.

The passive readhead 310 is arranged to input the source light 30 through the beam directing element 322 and output the scale illumination light 35 at an angle of incidence along the Y-Z plane to the scale grating 80. Certain elements of the passive readhead 310 in this regard are shown in more detail in the lower portions of FIGURE 3. More specifically, while the upper right portion of FIGURE 3 shows a side view (i.e., a view along the Y-axis direction) of the optical encoder configuration 300, the lower right portion of FIGURE 3 shows a view of certain elements on the substrate 390 of the passive readhead 310, along a section AA as defined in the upper right portion (i.e., along the Z-axis direction). In addition, the upper left portion of FIGURE 3 shows an end view (i.e., a view along the X-axis direction) of the optical encoder configuration 300, and the lower left portion of FIGURE 3 shows a view of certain elements on the substrate 390 of the passive readhead 310, along a section BB as defined in the upper left portion (i.e., along the Z-axis direction). As shown in the upper right portion of FIGURE 3, in the scale illumination path portion 320, the source light 30 reaches an illumination splitter 323 such as a source grating located on the substrate 390 with an illumination grating pitch IGP which provides a plurality of diffracted order beams of the scale light 35 (e.g., 35-0 zero order, 35-P +1st order, 35-M -1^{st} order), to the scale grating 80. Alternatively, a refractive element which functions similarly may be used instead of a source grating.

The scale grating 80 is arranged to receive the scale illumination light 35 and reflect output interference light 40 and 40' to the passive readhead 310 at an angle in the Y-Z plane, wherein a spatial phase of the interference light depends upon the measurement position of the passive readhead 310 relative to the scale grating 80. In the specific embodiment illustrated in FIGURE 3, the plurality of beams of the scale illumination light 35 (e.g., 35-0 zero order, 35-P +1st order, 35-M -1^{st} order) are diffracted by the scale grating 80 to provide a plurality of beams of interference light 40 and 40' (e.g., 40-0 from the diffracted 35-0 beam, 40-P from the diffracted 35-P beam, 40'-0 from the diffracted 35-0 beam, and 40'-M from the diffracted 35-M beam) that interfere (e.g., to form fringes 41 and 41' in this particular embodiment).

The measurement light path portions 350 and 350' receive the fringes of the interference light 40 and 40', and include phase signal portions 360 and 360' (e.g., spatial filters) which spatially filter the fringes, to provide spatially filtered light according to previously described principles. It will be appreciated that in various embodiments the phase signal portions 360 and 360' may be implemented in various forms. In the specific example implementation shown in the lower portion of FIGURE 3, the phase signal portions 360 and 360' comprise a plurality of phase paths 361-X and 361'-X (each having corresponding periodic spatial filters 365-0 to 365-270 and 365'-0 to 365'-270) which input the interference light 40 and 40' and output the spatially filtered light to form corresponding respective intensity regions 51-X and 51'-X in the measurement light 50 and 50'. The intensity regions have average intensities related to the spatial phase of the input interference light 40 and 40' and the phase offset of the corresponding phase path. In one embodiment, the spatial filters 365-X and 365'-X are fixed to the substrate 390 and have light-blocking elements arranged at a phase filter pitch PFP that is operable for spatially filtering the interference light 40 and 40' to provide the sensed intensity regions 51-X and 51'-X in the measurement light 50 and 50', as previously outlined. In particular, the output light that is spatially filtered from each spatial filter section 365-X and 365'-X provides a spatially filtered pattern of light that has an average intensity that depends on the phase offset of that section relative to the spatial phase of the interference light 40 and 40', which in turn depends on the position of the scale grating 80. In some embodiments, each spatially filtered pattern of light is output or imaged through a measurement light dispersing element 370 or 370' to provide a corresponding intensity region 51-X or 51'-X that may be imaged from various angles and that may have a relatively uniform intensity distribution corresponding to the input average intensity. The various intensity regions 51-X and 51'-X provide output measurement light 50 and 50' that may be sensed and processed to provide position-indicating signals, as outlined herein.

For purposes of explanation, FIGURE 3 shows representative intensity regions 51-X and 51'-X and photodetector areas 388-X and 388'-X schematically represented with dashed outlines superimposed on each spatial filter section 365-X and 365'-X and phase path 361-X and 361'-X for illustrating their operational alignment, from the point of view of the operation of the photodetector arrangement 388 in the sensing portion 382. That is, the remote companion system 380 is aligned relative to the passive readhead 310 such that the respective photodetector areas 388-X and 388'-X input measurement light from the corresponding respective intensity regions 51-X and 51'-X. The respective photodetector areas 388-X and 388'-X thus receive an intensity signal related to the position of the scale grating 80 and the spatial phase of the phase signal portions 360-X and 360'-X (e.g., the spatial filter sections 365-X and 365'-X) that determine the measurement light that they receive.

The remote lens portion 384 is arranged to input the measurement light 50 and 50' and provide an image of the plurality of respective intensity regions to the photodetector arrangement 388, as outlined above. In one embodiment, the remote lens portion 384 images a plane approximately at the output of the phase signal portions 360 and 360' onto the photodetector arrangement 388 (e.g., proximate to the output surface of the measurement light dispersing element 370 or 370'). As previously indicated, the photodetector arrangement 388 includes a plurality of photodetectors 388-X or 388'-X and is configured to sense an intensity of each of the imaged plurality of respective intensity regions 51-X or 51'-X and output a plurality of signals 60 based on the sensed intensities and indicative of the measurement position. In some embodiments the remote lens portion 384 may be configured to provide a desired amount of image blur, to help spatially average or blur patterns in the light that it outputs, such that the imaged intensity regions are each more homogeneous at the photodetector arrangement 388.

As previously indicated, the measurement light dispersing element 370 may be utilized to scatter or otherwise disperse the measurement light 50 and 50' such that it can be imaged by the sensing portion 382 along a plurality of potential imaging paths. That is, in the absence of a dispersing element 370, in certain embodiments the light rays that pass through the phase signal portions 360 and 360' may continue along their original "straight" paths and potentially miss the sensing portion 382, or make its alignment more difficult, especially if it is tens or hundreds of millimeters away. In an alternative embodiment, a lens arrangement may be utilized in place of the diffuser of the measurement light dispersing element 370, wherein the sensing portion 382 is able to view the lens arrangement from a variety of angles and still receive the measurement light.

As previously indicated, the measurement light path portion 350 (and/or 350') may receive the interference light 40 (and/or 40') from the scale grating 80 and output the measurement light 50 (and/or 50') along a second (and/or third) path to the remote lens portion 384. It will be appreciated that, due to the remote companion system 380 being located remotely, the second (and/or third) path may have a length D2 that is significantly longer (e.g., at least 5 times longer) than a gap distance D1 between the passive readhead 310 and the scale grating 80, and/or any optical path length within the housing of the passive readhead 310, itself.

FIGURE 4 is a schematic diagram of an exemplary embodiment of a substrate 490 which may be used in a phase signal portion of a passive readhead (e.g., it may be used in place of the substrate 390 shown in FIGURE 3). In various exemplary embodiments, elements on the substrate 490 include various elements and operating principles which are similar to the elements on the substrate 390 described above with respect to FIGURE 3. In general, elements numbered 4XX in FIGURE 4 provide functions similar to the analogous elements numbered 3XX in FIGURE 3 (that is, with the same numerical suffix), unless described otherwise below. In particular, phase signal portions 460 and 460' may include slanted light-blocking elements that provide the spatial filters 465-0 to 465-270 and 465'-0 to 465'-270, which operate in a manner comparable in function to the "not slanted" light blocking elements, that vary by discrete phase offsets, as shown in the phase signal portions 360 and 360' of FIGURE 3.

For purposes of explanation, FIGURE 4 shows representative intensity regions 51-X and 51'-X and photodetector areas 488-X and 488'-X schematically represented with dashed outlines superimposed on each spatial filter section 465-X and 465'-X and phase path 461-X and 461'-X for illustrating their operational alignment, from the point of view of the operation of the photodetector arrangement 488 in a sensing portion (not shown). That is, a remote companion system is aligned relative to a passive readhead such that the respective photodetector areas 488-X and 488'-X input measurement light from the corresponding respective intensity regions 51-X and 51'-X. The respective photodetector areas 488-X and 488'-X thus receive an intensity signal related to the position of the scale grating 80 and the spatial phase of the phase signal portions 460-X and 460'-X (e.g., the spatial filter sections 465-X and 465'-X) that determine the measurement light that they receive, as outlined previously for analogous elements.

An advantage of the slanted elements shown in phase signal portions 460 and 460', relative to the "not slanted" elements shown on the phase signal portions 360 and 360' in FIGURE 3, is that the slanted elements are not sensitive to slight misalignment along the Y-axis direction. That is, the detector spacing S, in combination with the angle of the slant, determines the relative phase offsets of the various phase paths 461-X and 461'-X, without regard to the overall alignment of the photodetector areas 488-X and 488'-X relative to each spatial filter section 465-X and 465'-X. In contrast, misalignment of the phase signal portions 360 and 360' of FIGURE 3 along the Y-axis direction may cause their signal to fall outside of their intended photodetector area, causing an erroneous signal in an adjacent photodetector area, or diminishing the signal in the intended photodetector area, or both.

It will be appreciated that the slanted light-blocking elements in the spatial filters 465-0 to 465-270 and 465'-0 to 465'-270 illustrate a configuration in which the light blocking elements of the spatial filter sections are essentially rotated with respect to the periodic pattern of the measurement light. In one even more specific implementation, at least a portion of the periodic pattern of the light blocking elements may have a chevron shape (as is known in the art) which comprises sections of opposite slants, which are thus symmetric with respect to an axis parallel to the measurement axis, and which can thus be understood by analogy with the sections of uniform slant as shown in FIGURE 4.

In various embodiments, the photodetector areas in the photodetector arrangement that are represented by the photodetector areas 188-X and 188'-X, 388-X and 388'-X, or 488-X and 488'-X include addressable pluralities of pixels of a 2D array, in which the pixel addresses which contribute to a particular phase signal can be selected as part of a calibration/alignment procedure. It will be appreciated that such a configuration allows for greater flexibility in the mechanical alignment of the detectors (e.g., which in some embodiments can thus be approximate), in that the "detector alignment" can be accomplished in software, by defining the pixels that contribute to a particular phase signal.

It should be appreciated that in some embodiments the measurement light path portion may include a magnifying arrangement located to receive the interference light from the scale grating wherein the interference light includes interference fringes having a first finer pitch (e.g., due to a small grating pitch, such as one micron), and output interference light including interference fringes having a second coarser pitch to the remaining elements of the measurement light path portion. For example, the remaining elements of the measurement light path portion may include spatial filters in some embodiments (e.g., as outlined above) and coarser fringes (e.g., such as 4, 8, or 20 microns, or more) may allow more economical and/or robust spatial filtering arrangements. Of course the magnifying arrangement may be configured to provide a fractional magnification (demagnification) if it is desired to input coarser fringes (e.g., 40 microns, or 100 microns, or more) and output finer fringes (e.g., 40 microns or less). Various techniques are known for providing such magnifying arrangements, for example conventional and/or telecentric magnifying lens arrangements, and/or grating systems according to teachings disclosed in U.S. Patent Nos. 3,796,498, 5,009,506, and U.S Patent Application Publication No. 2009/0279100 Al, which are hereby incorporated by reference in their entireties.

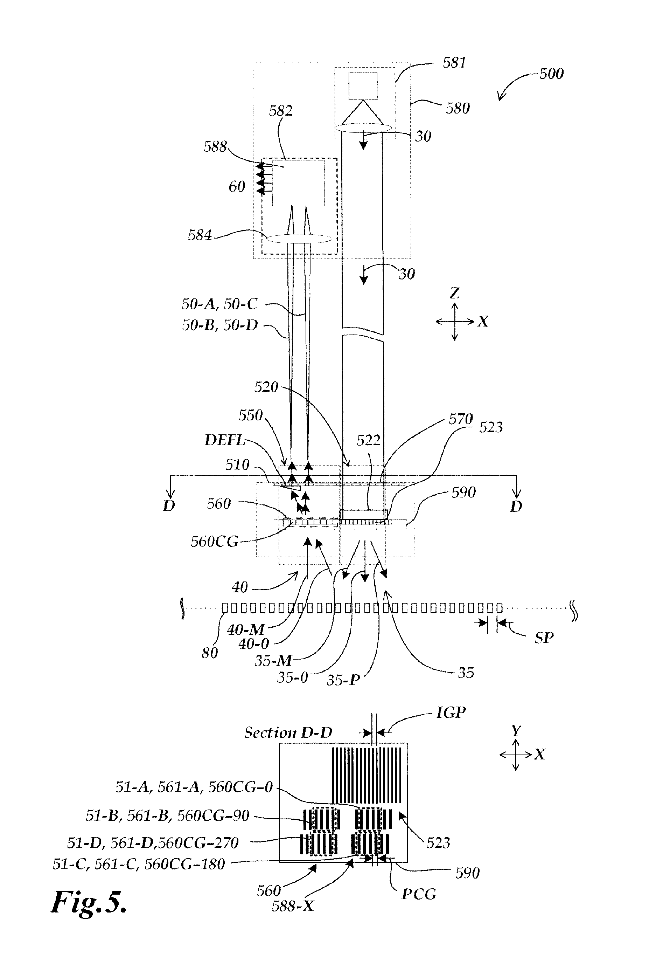

FIGURE 5 is a schematic diagram showing a side view (along the Y-axis direction) of an exemplary embodiment of an optical encoder configuration 500 utilizing a passive readhead 510 including a third embodiment of a measurement light portion 550, which may be regarded as showing one exemplary embodiment of the optical encoder configuration 100 of FIGURE 1. The optical encoder 500 may be regarded as analogous to the optical encoder configuration 300, and may be understood by analogy, except for distinctions related primarily to the third embodiment of a measurement light portion 550 described below. In general, elements numbered 5XX in FIGURE 5 provide functions similar to the analogous elements numbered 3XX (that is, with the same numerical suffix) in FIGURE 3, and many elements and aspects of operation may be understood by analogy, and are not described in detail below.

The passive readhead 510 includes a beam deflector 522 so that the input and output optical paths are spaced apart along the Y-axis similarly to the encoder configuration 300 of FIGURE 3, and an end view (not shown) along the X-axis direction would be analogous to that shown at the left portion of FIGURE 3. More specifically, the source light 30 travels to the beam directing element 522 which directs it along an inclined path in the Y-Z plane to the scale grating 80 which reflects it along an inclined path in the Y-Z plane, resulting in the measurement light 50 and 50' being spaced apart from the source light 30 along the Y-axis direction.

As shown in FIGURE 5, similar to the corresponding elements of FIGURE 3, the passive readhead 510 includes a scale illumination path portion 520 and measurement light path portions 550, while the remote companion system 580 includes the light source 581 and the sensing portion 582. The light source 581 may operate similarly to the previously outlined light source 381. The sensing portion 582 includes a remote lens portion 584 and a photodetector arrangement 588.

The passive readhead 510 is arranged to input the source light 30 through the beam directing element 522 and output the scale illumination light 35 at an angle of incidence along the Y-Z plane to the scale grating 80. Certain elements of the passive readhead 510 in this regard are shown in more detail in the lower portions of FIGURE 5. More specifically, while the upper right portion of FIGURE 5 shows a side view (i.e., a view along the Y-axis direction) of the optical encoder configuration 500, the lower right portion of FIGURE 5 shows a view of certain elements on the substrate 590 of the passive readhead 510, along a section DD as defined in the upper right portion (i.e., along the Z-axis direction). As shown in the upper right portion of FIGURE 5, in the scale illumination path portion 520, the source light 30 reaches an illumination splitter 523 such as a source grating located on the substrate 590 with an illumination grating pitch IGP which provides a plurality of diffracted order beams of the scale light 35 (e.g., 35-0 zero order, 35-P +1st order, 35-M -1^{st} order), to the scale grating 80. Alternatively, a refractive element which functions similarly may be used instead of a source grating.

The scale grating 80 is arranged to receive the scale illumination light 35 and reflect or output interference light 40 to the passive readhead 510 at an angle in the Y-Z plane, wherein a spatial phase of the interference light depends upon the measurement position of the passive readhead 510 relative to the scale grating 80. In the specific embodiment illustrated in FIGURE 5, the plurality of beams of the scale illumination light 35 (e.g., 35-0 zero order, 35-M -1^{st} order) are diffracted by the scale grating 80 to provide a plurality of beams of the interference light 40 (e.g., 40-0 from the diffracted 35-0 beam, and 40-M from the diffracted 35-M beam) that is input to the measurement light portion 550.

The third embodiment of a measurement light portion 550 operates differently from the first and second embodiments 150 and 350, respectively, outlined above. Although the interference light 40 may include interference fringes proximate to the scale grating 80, these are not used directly. Rather, the diffracted rays 40-0 and 40-M of the interference light 40 are input to a combiner grating 560CG included in the phase signal portion 560 of the measurement light path portion 550. The grating pitch PCG of the combiner grating 560CG is selected such that it outputs a further diffracted component of the input diffracted ray 40-0 parallel to the "undiffracted" output component from the input diffracted ray 40-M, to form the measurement light component 50-A. These parallel components interfere in the measurement light component 50-A. Since they are parallel, the measurement light component 50-A includes no significant fringe structure. Rather, it provides the desired intensity region without the need for additional spatial filtering, and the intensity of the intensity region depends on the relative spatial phases of its parallel output components, which in turn depend on the spatial phase of the interference light which varies with the measurement position of the scale grating 80.

Similarly, the combiner grating 560CG outputs a further diffracted component of the input diffracted ray 40-M parallel to the "undiffracted" output component from the input diffracted ray 40-0, to form the measurement light component 50-B. These parallel components interfere in the measurement light component 50-B. Since they are parallel, the measurement light component 50-B includes no significant fringe structure. Rather, it provides the desired intensity region without the need for additional spatial filtering, and the intensity of the intensity region depends on the relative spatial phases of its parallel output components, which in turn depend on the spatial phase of the interference light, which varies with the measurement position of the scale grating 80. A deflector element DEFL may deflect the measurement light component 50-B to be output toward the remote companion system 580. In such a case, the measurement light dispersing element 570 may be optional, or omitted, in some embodiments, provided that the measurement light components 50-A and 50-B can be maintained in alignment with the corresponding elements of the photodetector arrangement 588 (e.g., as outlined below). Alternatively, when the measurement light dispersing element 570 is included, the deflector DEFFL may be optional, or omitted, in some embodiments, since the measurement light dispersing element 570 itself allows the intensity region provided by the measurement light component 50-B to be imaged from various angles by the sensing portion 582, according to previously outlined principles.

It will be appreciated that the phase signal portion 560 may comprise a plurality of phase paths 561-X (each having corresponding combiner grating 560CG-0 to 560CG-270) which input the interference light 40 and output the corresponding respective intensity regions 51-X in the measurement light 50. The intensity regions have average intensities related to the spatial phase of the input interference light 40 and the phase offset of the corresponding phase path. The phase offset of each phase path depends on the various grating pitches in the passive readhead 510 and/or the spatial phase offsets (the relative placements) of the various combiner gratings 560CG-0 to 560CG-270. One skilled in the art may achieve desired phase offsets by design based on analysis or experiment. For example, teachings relevant to design analysis may be found in U.S. Patent No. 4,776,701, which is hereby incorporated by reference in its entirety. In one embodiment, the combiner gratings 560CG-0 to 560CG-270 are fixed to the substrate 590 and have light-blocking elements arranged at a combiner grating pitch PCG that is operable at the desired diffraction angles, as previously outlined. The various intensity regions 51-X provide output measurement light 50 that may be sensed and processed to provide position-indicating signals, as outlined herein.

For purposes of explanation, FIGURE 5 shows representative intensity regions 51-X and photodetector areas 588-X schematically represented with dashed outlines superimposed on each combiner grating 560CG-X in each phase path 561-X for illustrating their operational alignment, from the point of view of the operation of the photodetector arrangement 588 in the sensing portion 582. That is, the remote companion system 580 is aligned relative to the passive readhead 510 such that the respective photodetector areas 588-X input measurement light from the corresponding respective intensity regions 51-X. The respective photodetector areas 588-X thus receive an intensity signal related to the position of the scale grating 80 and the spatial phase of the phase signal portions 560-X (e.g., the combiner gratings 560CG-X) that determine the measurement light that they receive.

The remote lens portion 584 is arranged to input the measurement light 50 and provide an image of the plurality of respective intensity regions to the photodetector arrangement 588, as outlined above. In one embodiment, the remote lens portion 584 images a plane approximately at the output of the phase signal portions 560 onto the photodetector arrangement 588 (e.g., proximate to the output surface of the measurement light dispersing element 570). As previously indicated, the photodetector arrangement 588 includes a plurality of photodetectors 588-X and is configured to sense an intensity of each of the imaged plurality of respective intensity regions 51-X and output a plurality of signals 60 based on the sensed intensities and indicative of the measurement position. In some embodiments the remote lens portion 584 may be configured to provide a desired amount of image blur, to help spatially average or blur patterns in the light that it outputs, such that the imaged intensity regions are each more homogeneous at the photodetector arrangement 588.

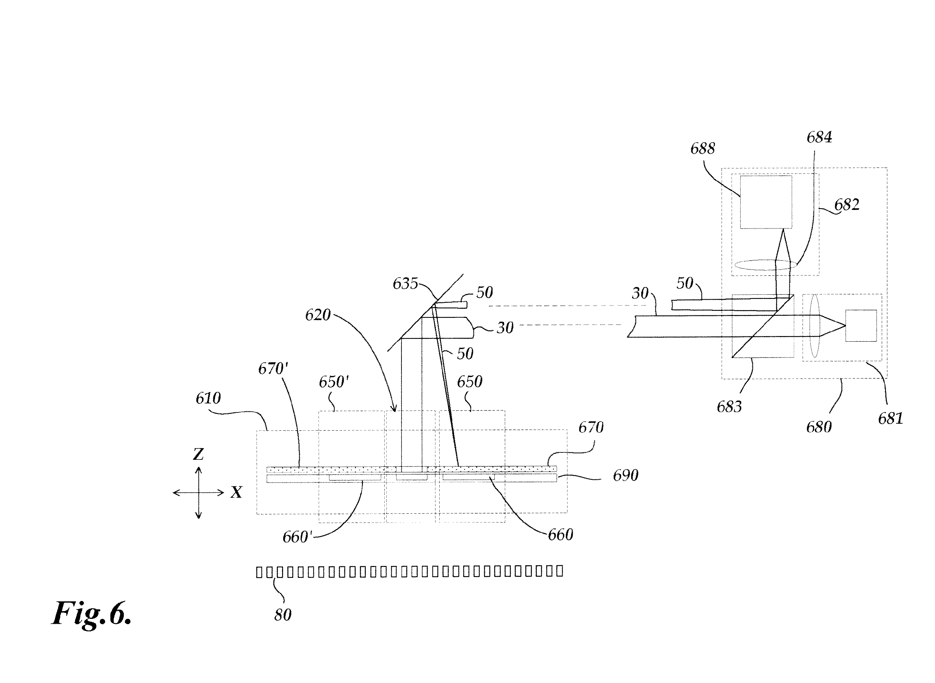

FIGURE 6 is a schematic diagram of an exemplary embodiment of an optical encoder configuration 600 with a deflector element 635 adjacent to the passive readhead 610, wherein the input and output optical paths are approximately parallel to the measuring axis direction. In one embodiment, the deflector element 635 is included in a housing of the passive readhead 610. In another embodiment, the deflector element 635 is simply aligned and mounted in a fixed relationship relative to the passive readhead 610. It will be appreciated that the specific embodiment illustrated in FIGURE 6 is intended to be exemplary only and not limiting. In various exemplary embodiments, the optical encoder configuration 600 includes various elements and operating principles which are similar to the optical encoder configuration 200 described above with respect to FIGURE 2. In general, elements numbered 6XX in FIGURE 6 provide functions similar to the analogous elements numbered 2XX (that is, with the same numerical suffix) in FIGURE 2; therefore, only significant differences will be emphasized in the following description.

In one specific example implementation, the remote companion system 680, the deflector element 635, and the passive readhead 610 are fixed in position, while the scale grating 80 is moved along the X-axis direction during measurement operations. Such an optical encoder configuration may operate similarly to that previously described with reference to FIGURE 2.

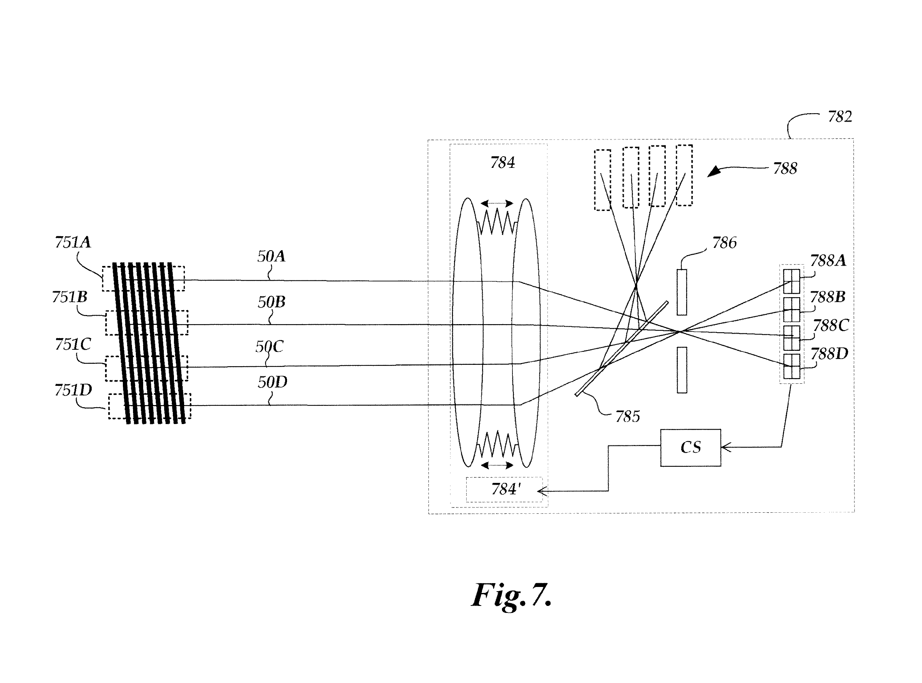

In another specific example implementation, the scale grating 80 and the remote companion system 680 are fixed in position, while the passive readhead 610 and the deflector element 625 are moved during measurement operations. In such an implementation, the optical encoder configuration 600 may operate according to previously described principles, with the exception that the imaging element 684 of the remote companion system 683 must be configured and actively controlled according to known techniques for focusing and magnification in order to properly image the measurement light 50 proximate to the measurement light portions 650 and 650' (e.g., proximate to an output surface of the measurement light dispersing element 670 or 670'), and in order to fit and/or align the previously outlined intensity regions on the photodetectors, regardless of the changing distance to the measurement light portions 650 and 650', as described further below with reference to FIGURE 7. In one embodiment, to facilitate robust operation in such an implementation, the spacing and/or size of the photodetector areas in the photodetector arrangement 688, and/or the spacing and size of the phase paths in the phase signal portions 460 and 460', may be increased relative to previously described embodiments, so that alignment and focus are made less critical. However, this is not required in some embodiments.

It should be appreciated that the foregoing embodiment is exemplary only, and not limiting. For example, FIGURE 6 discloses an embodiment using a passive readhead arrangement similar to that shown in FIGURE 2. Alternatively, an embodiment is possible using a passive readhead arrangement similar to that shown in FIGURE 3. In such a case, the remote companion system could be rotated around the X-axis by 90 degrees relative to that shown in FIGURE 6, and the beamsplitter shown in the remote companion system 680 could be omitted, due the input and output paths being offset from each other along the Y-axis direction. Other embodiments that provide input and output optical paths approximately parallel to the measuring axis direction will be apparent to one of ordinary skill in the art based on teachings included herein.

FIGURE 7 is a schematic diagram of an exemplary embodiment of a sensing portion 782 including a dynamic tracking system which is suitable for use in place of the sensing portion 682 in the remote companion system 680 of FIGURE 6. In general, elements numbered 7XX in FIGURE 7 provide functions similar to the analogous elements numbered 6XX (that is, with the same numerical suffix) in FIGURE 6, and/or 3XX in FIGURE 3, therefore, only significant differences will be emphasized in the following description.

As shown in FIGURE 7, the sensing portion 782 is aligned with measurement light (paths or rays) 50A-50D (which may correspond to previously outlined individual intensity regions 751A-751D). The sensing portion 782 includes a remote autofocus lens portion 784 which may comprise a zoom and/or autofocus lens arrangement and actuator, and a control portion 784', configured according to known principles (e.g., a suitable commercially available unit, if desired), a beam splitter 785, a photodetector arrangement 788, an autofocus aperture 786, and a group of autofocus detectors 789A-789D. In one embodiment, the detectors 789A-789D may comprise quadrature detectors, or PSDs, etc. During operation, the respective intensity regions 751A-'751D output measurement light 750A-750D along respective paths to the remote autofocus lens portion 784 of the sensing portion 782. The remote autofocus lens portion 784 is arranged to input the measurement light 750A-750D and provide an image of the respective intensity regions 751A-75 1D through the autofocus aperture 786 to the detectors 789A-789D.

The detectors 789A-789D are configured to sense an intensity and/or location of each of the images of the respective intensity regions 751A-751D and output signal(s) CS indicative of their degree of focus (e.g., their corresponding spot position or spot size on the detectors). The control portion 784' of the autofocus lens portion 784 inputs the signal(s) CS, and controls actuators that govern the lens configuration to focus the image of the respective intensity regions 750A-750D on the detectors 789A-789D. At the same time, the beam splitter 785 directs a portion of the measurement light 750A-750D to provide a focused image of the respective intensity regions 750A-750D on the photodetector arrangement 788, which provide signals indicative of the measurement position, as previously outlined.

In an alternative embodiment, a separate autofocus signal region may be provided at the output of the passive readhead, wherein the signal is always strong (e.g., from a reflection from special target on the passive readhead which is illuminated by the light source of the remote companion system). In another alternative embodiment, signals from the photodetector arrangement 788 may be processed by a focus signal generating circuit or routine in order to provide control signals usable by the control portion 784' of the autofocus lens portion 784. For example, if the photodetector arrangement 788 comprises a 2-D pixel array, focus may be determined when the images of the intensity regions 751A-751D exhibit the highest intensity on a limited number of pixels. It will be appreciated the foregoing embodiments of a focusing system are exemplary only and not limiting. Various dynamic autofocus and/or zoom methods based on known techniques may be utilized.

While the preferred embodiment of the invention has been illustrated and described, numerous variations in the illustrated and described arrangements of features and sequences of operations will be apparent to one skilled in the art based on this disclosure. Thus, it will be appreciated that various changes can be made therein without departing from the spirit and scope of the invention.

## Claims

1. An optical encoder configuration comprising:
a scale grating comprising a periodic grating pattern extending along a measurement axis direction;
a passive readhead located proximate to the scale grating, wherein one of the scale grating and the passive readhead is movable to a plurality of measurement positions relative to the other along the measurement axis direction, the passive readhead comprising a scale illumination path portion and a measurement light path portion; and
a remote companion system comprising a light source, and a sensing portion comprising a remote lens portion, and a photodetector arrangement,
wherein:
the remote companion system is arranged remotely from the passive readhead to output source light along a first path to the passive readhead which is arranged to input the source light and output scale illumination light from the scale illumination path portion to the scale grating;
the scale grating is arranged to receive the scale illumination light and output interference light to the passive readhead, a spatial phase of the interference light depending upon the measurement position;
the passive readhead is arranged such that the measurement light path portion receives the interference light from the scale grating and outputs measurement light comprising a plurality of respective intensity regions along a second path to the remote lens portion,
wherein the measurement light path portion includes a phase signal portion comprising a plurality of phase paths which input the interference light and provide corresponding respective intensity regions, wherein the phase paths have corresponding phase offsets and are configured such that an intensity of each respective intensity region is related to the spatial phase of the input interference light and the phase offset of the corresponding phase path;
the remote lens portion is arranged to input the measurement light and provide an image of the plurality of respective intensity regions to the photodetector arrangement; and
the photodetector arrangement is configured to sense an intensity of each of the imaged plurality of respective intensity regions and output a plurality of signals indicative of the measurement position based on the sensed intensities.

2. The optical encoder configuration of Claim 1, wherein the phase signal portion comprises spatial filters having light-blocking elements arranged in a periodic pattern having a pitch that is operable for spatially filtering the measurement light.

3. The optical encoder configuration of Claim 2, wherein at least a portion of the periodic pattern of the light blocking elements is rotated with respect to the periodic pattern of the measurement light.

4. The optical encoder configuration of Claim 2 or 3, wherein the light-blocking elements have a chevron shape which is symmetric with respect to an axis parallel to the measurement axis.

5. The optical encoder configuration of any one of Claims 2 - 4, wherein the passive readhead comprises a substrate and the spatial filters are fixed to the substrate and the scale illumination light is transmitted through the substrate.

6. The optical encoder configuration of Claim 5, wherein the scale illumination path portion comprises a source grating that inputs the source light and outputs scale light comprising diffracted orders, wherein the source grating is preferably on the substrate.

7. The optical encoder configuration of any one of Claims 1 - 6, wherein the phase signal portion comprises at least one combiner grating having grating elements arranged in a periodic pattern having a pitch that is operable for inputting rays of the interference light from the scale grating and outputting the rays of various diffracted orders of the interference light along parallel paths, such that the parallel rays interfere to provide corresponding intensity regions output from each phase path.

8. The optical encoder configuration of Claim 7, wherein the passive readhead comprises a substrate and the grating elements are fixed to the substrate and the scale illumination light is transmitted through the substrate.

9. The optical encoder configuration of any one of Claims 1 - 8, wherein the measurement light path portion comprises a measurement light dispersing element positioned to receive light from the phase signal portion and output the measurement light.

10. The optical encoder configuration of Claim 9, wherein the measurement light dispersing element comprises at least one of a diffuser and a layer of phosphor particles.

11. The optical encoder configuration of any one of Claims 1 - 10,
wherein the second path is longer, preferably at least five times longer, than at least one of a gap distance between the passive readhead and the scale grating, and a maximum dimension of the passive readhead, and
wherein the second path preferably comprises a transparent material associated with an enclosure that surrounds the passive readhead.

12. The optical encoder configuration of any one of Claims 1 - 11, wherein the passive readhead comprises a magnifying arrangement configured to receive the interference light from the scale grating wherein the interference light includes interference fringes having a first pitch, and output interference light including interference fringes having a second pitch to elements of the measurement light path portion.

13. The optical encoder configuration of any one of Claims 1 - 12, wherein the passive readhead and remote companion system are located in separate housings.

14. The optical encoder configuration of any one of Claims 1 - 13, wherein the passive readhead comprises a deflector element which receives the source light along the measuring axis direction and directs it toward the scale grating, and receives the measurement light along a direction transverse to the measuring axis direction and directs it along the measuring axis direction toward the remote companion system,
and/or
wherein the passive readhead comprises a deflector element which receives the source light and directs it transverse to the measuring axis direction at an angle of incidence relative to the scale grating.

15. The optical encoder configuration of any one of Claims 1 - 14, wherein the remote lens portion comprises an auto-focusing arrangement, wherein during measurement operations the readhead is moved relative to the remote companion system and the scale, and the auto-focusing arrangement is configured to provide an autofocused image of the plurality of respective intensity regions to the photodetector arrangement.
